# EUROPÄISCHE PATENTSCHRIFT

(11) **EP 1 387 235 B1**
(45) Veröffentlichungstag und Bekanntmachung des Hinweises auf die Patenterteilung: **06.10.2004**
(21) Anmeldenummer: 02017381.1
(22) Anmeldetag: 02.08.2002
(51) Int. Cl.: G06F 1/00

(54) **Verfahren zum Betreiben eines Computersystems und Computersystem**
Method for operating a computer system and computer system
Méthode de fonctionnement d'un système d'ordinateur et système d'ordinateur

(43) Veröffentlichungstag der Anmeldung: 04.02.2004
(73) Patentinhaber: Aladdin Knowledge Systems GmbH& Co. KG, 82110 Germering (DE)
(72) Erfinder: Zunke, Michael, 85609 Aschheim (DE)
(74) Vertreter: Grimm, Christian Jan Rainer

(56) Entgegenhaltungen:
- WO-A-00/60434
- US-A- 5 848 154
- US-B1- 6 226 749

## Beschreibung

Die Erfindung bezieht sich auf ein Verfahren zum Betreiben eines Computersystems, auf ein Computersystem sowie auf ein Computerprogrammprodukt.

Ein Verfahren zum Betreiben eines Computersystems, auf dem eine Anwendung installiert ist, wird häufig dazu eingesetzt, um die Laufberechtigung (Lizenz) der Anwendung zu überprüfen. Falls die Laufberechtigung abgelaufen ist, wird beispielsweise die Anwendung beendet und ein erneuter Aufruf der Anwendung unterbunden. Diese Art der Beendung der Anwendung ist jedoch nicht besonders anwenderfreundlich, da beispielsweise eine Sicherung des Arbeitsergebnisses (z.B. durch Abspeichern) nicht möglich ist.

Andererseits kann bei Ablauf der Laufberechtigung lediglich ein erneutes Starten der Anwendung unterbunden werden. In diesem Fall kann der Benutzer das Programm weiterlaufen lassen und somit auch weiter benutzen, obwohl die Laufberechtigung bereits abgelaufen ist.

Aus der WO 00/60434 A1 ist ein Verfahren zum Betreiben eines Computersystems bekannt, auf dem mehrere Anwendungen installiert sind, die unterschiedlichen Kategorien zugeordnet sind. Das Computersystem kann von mehreren Benutzergruppen benutzt werden, wobei den Benutzergruppen unterschiedliche Kategorien zugeordnet sind. Wenn nun ein Benutzer einer Benutzergruppe eine Anwendung ausführen will, die nicht in einer der Benutzergruppe zugeordneten Kategorien fällt, wird die Ausführung der Anwendung zumindest behindert, beispielsweise dadurch, daß die Ausführungsgeschwindigkeit der Anwendung verringert wird.

Ausgehend hiervon ist es Aufgabe der Erfindung, ein Verfahren zum Betreiben eines Computersystems sowie ein Computersystem bereit zu stellen, mit denen jeweils bei Ablauf der Laufberechtigung einer Anwendung ein anwenderfreundliches Beenden der Nutzung der Anwendung ermöglicht wird.

Erfindungsgemäß wird die Aufgabe durch ein Verfahren zum Betreiben eines Computersystems gelöst, auf dem die Anwendung installiert ist, wobei überprüft wird, ob eine vorbestimmte Laufberechtigung für die Anwendung vorliegt, und, falls die vorbestimmte Laufberechtigung nicht vorliegt, die Ausführungsgeschwindigkeit der Anwendung auf dem Computersystem verringert wird im Vergleich zur Ausführungsgeschwindigkeit der Anwendung bei Vorliegen der vorbestimmten Laufberechtigung, wobei die Verringerung der Ausführungsgeschwindigkeit mit der Zeit erhöht wird.

Dadurch wird erreicht, daß die durch die Anwendung bereitgestellte Funktionalität erhalten bleibt und somit beispielsweise ein Sichern des Arbeitsergebnisses durch Abspeichern möglich wird. Eine sinnvolle Nutzung ist jedoch bei geeigneter Verringerung der Ausführungsgeschwindigkeit nicht mehr möglich, so daß der Anbieter (bzw. Lizenzgeber) der Anwendung eine unberechtigte Nutzung der Anwendung verhindern kann. Da die Verringerung der Ausführungsgeschwindigkeit im Laufe der Zeit erhöht wird, wird ferner vorteilerhaft erreicht, daß anfangs noch ein anwenderfreundliches Beenden der Anwendung durch Abspeichem von Ergebnissen mit vernünftigern Zeitaufwand möglich ist und danach eine Nutzung der Anwendung aufgrund der immer weiter sinkenden Ausführungsgeschwindigkeit sicher unterbunden werden kann. Die Erhöhung der Verringerung kann zeitlich konstant sein oder mit der Zeit zunehmen (z.B. exponentiell).

Die Laufberechtigung kann beispielsweise abgelaufen sein und deshalb nicht (mehr) vorliegen. Sie kann auch aus jedem anderen Grund nicht vorliegen.

Das Computersystem kann ein herkömmlicher Personalcomputer oder auch ein aus mehreren Computern gebildetes System sein.

Mit anderen Worten betrifft das erfindungsgemäße Verfahren ein Verfahren zur Beeinflussung der Ausführung einer Anwendung auf einem Computersystem, das folgende Schritte umfaßt: Überprüfen, ob eine vorbestimmte Laufberechtigung für die Anwendung vorliegt, und, falls die vorbestimmte Laufberechtigung nicht vorliegt, Verringern der Ausführungsgeschwindigkeit der Anwendung auf dem Computersystem im Vergleich zur Ausführungsgeschwindigkeit bei Vorliegen der vorbestimmten Laufberechtigung, wobei die Verringerung der Ausführungsgeschwindigkeit mit der Zeit erhöht wird.

Eine bevorzugte Verringerung der Ausführungsgeschwindigkeit kann beispielsweise so gewählt werden, daß die verringerte Ausführungsgeschwindigkeit kleiner als 50%, insbesondere kleiner oder gleich 90% der Ausführungsgeschwindigkeit der Anwendung bei Vorliegen der vorbestimmten Laufberechtigung beträgt. Die Verringerung der Ausführungsgeschwindigkeit sollten auf jeden Fall so gewählt sein, daß ein vernünftiges Arbeiten mit der Anwendung praktisch nicht mehr möglich ist, aber einfache Aktionen, wie z.B. Abspeichem von Daten, noch durchführbar sind.

Insbesondere kann, falls im Überprüfungs-Schritt festgestellt wird, daß die vorbestimmte Laufberechtigung nicht vorliegt, noch ein Anzeige-Schritt ausgeführt werden, in dem eine Anzeige erzeugt wird, die den Benutzer über den Ablauf der Laufberechtigung informiert. ln der Anzeige kann zusätzlich darauf hingewiesen werden, daß die Ausführungsgeschwindigkeit der Anwendung verringert wird. Damit ist für den Benutzer ersichtlich, warum die Ausführungsgeschwindigkeit der Anwendung sinkt. Falls er die Anwendung weiter benutzen will, kann er eine neue Laufberechtigung erwerben.

In einer besonders vorteilhaften Ausgestaltung des erfindungsgemäßen Verfahrens wird der Überprüfungs-Schritt bei Aufruf der Anwendung und/oder während der Ausführung der Anwendung durchgeführt. Der Überprüfungs-Schritt kann während der Ausführung der Anwendung mehrmals durchgeführt werden (z.B. in vorbestimmten Zeitintervallen und/oder bei Auftreten eines vorbestimmten Ereignisses, das bei Ausführung der Anwendung eintritt, wie z.B. der Aufruf einer bestimmten Funktion oder einer bestimmten Routine der Anwendung). Insbesondere durch die Ausführung des Überprüfungs-Schritts während der Anwendungsausführung kann verhindert werden, daß eine unberechtigte Nutzung der Anwendung nach Ablauf der Laufberechtigung dadurch erfolgt, daß die Anwendung vom Benutzer nicht beendet wird.

Beim erfindungsgemäßen Verfahren kann zur Verringerung der Ausführungsgeschwindigkeit eine der Anwendung vom Computersystem bereitgestellte Ressource verknappt werden. Unter Ressource wird hier jedes Hardware- und/oder Softwaremodul des Computersystems verstanden, das von der Anwendung während seiner Ausführung benutzt wird. Damit kann in einfacher Art und Weise die Verringerung der Ausführungsgeschwindigkeit erreicht werden.

Eine Ressource, die verknappt wird, kann beispielsweise die Prozessorzeit (Zeitscheibe) sein, die der Anwendung (z.B. vom Betriebssystem des Computersystems) zugewiesen ist. Wenn diese verringert wird, wird automatisch auch die Ausführungsgeschwindigkeit der Anwendung verringert. Die Prozessorzeit kann auch dadurch verringert werden, daß die der Anwendung zugeordnete Priorität verringert wird, da der Anwendung bzw. jedem anderen auszuführenden Prozeß eine um so geringere Prozessorzeit bzw. um so kleinere Zeitscheibe zugewiesen wird, je geringer die Priorität ist. Die Verringerung der Priorität ist leicht durchführbar, da dazu die Anwendung selbst nicht verändert werden muß.

Falls die Anwendung mehrere Ausführungspfade (bzw. Threads) aufweist, können die Prioritäten der Ausführungspfade so verändert werden, daß die Ausführungsgeschwindigkeit der Anwendung insgesamt sinkt.

Ferner kann eine Ressource dadurch verknappt werden, daß sie anderweitig belegt wird. So kann beispielsweise der Arbeitsspeicher des Computersystems so belegt werden, daß der Anwendung weniger Arbeitsspeicher zur Verfügung steht. Auch kann der Anwendung gleich direkt ein geringerer Arbeitsspeicher zugewiesen werden. Dies führt dann dazu, daß während der Ausführung der Anwendung mehr Daten und/oder Code auf z.B. eine Festplatte des Computersystems ausgelagert werden müssen, wodurch die Ausführungsgeschwindigkeit sinkt.

Eine Verknappung einer Ressource kann auch dadurch erreicht werden, daß die Möglichkeit der Eingabe von Daten über eine Eingabeeinheit (wie z.B. Tastatur oder Maus) des Computersystems verlangsamt wird. So kann bei einer Maus bewirkt werden, daß die gleiche Verschiebung eines Mauszeigers auf einem Bildschirm des Computersystems eine sehr viel größere Bewegung der Maus erfordert im Fall der abgelaufenen Laufberechtigung im Vergleich zum Fall der vorliegenden Laufberechtigung. Ferner kann man auch die Anzahl der Mausklicks oder der Tastenbestätigungen pro Zeiteinheit, die weiter verarbeitet werden, verringern.

Besonders bevorzugt ist es, wenn die Bandbreite, mit der die Anwendung mit anderen Software- und/oder Hardware-Elementen des Computersystems kommuniziert, verringert wird. So kann die Bandbreite, mit der über eine Eingabeeinheit (z.B. Tastatur, Maus) eingegebene Informationen zur Anwendung übertragen werden, verringert werden. Dadurch sinkt die Ausführungsgeschwindigkeit, da die Anwendung länger auf notwendige Informationen warten muß. Die Bandbreitenverringerung erfordert vorteilhafter Weise keinen Eingriff in die Anwendung selbst und ist daher leicht realisierbar bzw. auf automatisiertem Wege realisierbar (z.B. mittels der sogenannten automatischen Einbindung, die später detaillierter beschrieben wird).

Weiterhin kann zur Verringerung der Ausführungsgeschwindigkeit die Überprüfung des Vorliegens der vorbestimmten Laufberechtigung beispielsweise so oft und/oder so langsam durchgeführt werden, daß dadurch die gewünschte Verringerung der Ausführungsgeschwindigkeit erreicht wird. Wenn die Anwendung zumindest teilweise verschlüsselt ist, kann die notwendige Entschlüsselung und gegebenenfalls auch eine Verschlüsselung von Daten und/oder Code der Anwendung bei Nichtvorliegen bzw. Ablauf der vorbestimmten Laufberechtigung langsamer durchgeführt werden als bei Vorliegen der vorbestimmten Laufberechtigung.

Eine bevorzugte Ausgestaltung des erfindungsgemäßen Verfahrens besteht darin, die Rechenleistung des Computersystems zur Verringerung der Ausführungsgeschwindigkeit zu verringern. Bei dieser Ausgestaltung muß man in vorteilhafter Weise an der Anwendung selbst nichts ändern. Es wird lediglich die Rechenleistung des Computersystems bzw. seine Performance verringert. Dies kann man z.B. dadurch erreichen, daß man die Taktfrequenz der CPU (zentrale Verarbeitungseinheit) verringert. Man kann auch einen kleineren vorhandenen Arbeitsspeicher ausweisen, so daß mehr Daten und Code auf z.B. eine Festplatte des Computersystems ausgelagert werden müssen, wodurch eine Geschwindigkeitsverringerung erzielt wird.

Ferner kann beim erfindungsgemäßen Verfahren zur Verringerung der Ausführungsgeschwindigkeit zusätzlicher Code ausgeführt werden. Es kann sich dabei um Code der Anwendung handeln, der nur zur Verringerung der Ausführungsgeschwindigkeit ausgeführt wird. So kann beispielsweise mit dem zusätzlichen Code eine Warteschleife realisiert werden. Auch ist es möglich, daß der zusätzliche Code eine Verringerung der Ausführungsgeschwindigkeit um einen vorbestimmten Prozentsatz im Vergleich zur Ausführungsgeschwindigkeit bei Vorliegen der Laufberechtigung dadurch realisiert, daß er ausgehend von der/den der Anwendung zugewiesenen Zeitscheibe(n) und dem vorbestimmten Prozentsatz eine entsprechende Zeitdauer bestimmt, in der eine Wartefunktion ausgeführt wird.

Insbesondere kann bei dem erfindungsgemäßen Verfahren eine Verringerung der Ausführungsgeschwindigkeit dadurch erreicht werden, daß die von der Anwendung bei der Ausführung benötigte Systemleistung erhöht wird. Dies kann beispielsweise dadurch erreicht werden, daß schon in den Arbeitsspeicher des Computersystems geladene Anwendungsabschnitte (beispielsweise Daten und/oder Code) als nicht vorhanden markiert werden, so daß diese, obwohl sie tatsächlich vorhanden sind, nochmals in den Arbeitsspeicher geladen werden müssen.

Das erfindungsgemäße Verfahren wird bevorzugt so weitergebildet, daß zur Verringerung der Ausführungsgeschwindigkeit die Ausführung der Anwendung zeitweise unterbrochen wird. Nach den jeweiligen Unterbrechungen kann die Ausführung fortgesetzt werden. Dies führt insgesamt zu der gewünschten Verringerung der Ausführungsgeschwindigkeit. Die zeitweise Unterbrechung der Ausführung eignet sich besonders gut für eine gezielte Einstellung der Verringerung der Ausführungsgeschwindigkeit. Wenn das Computersystem bzw. dessen Betriebssystem eine sogenannte Timer-Funktion bereitstellt, die in einem einstellbaren Zeitintervall der Anwendung jeweils eine Nachricht übermittelt, kann man die Ausführung der Anwendung jeweils bei Übermittlung der Nachricht unterbrechen. Die Unterbrechungsdauer kann man als prozentualen Anteil des Zeitintervalls festlegen, so daß eine äußerst genaue Verringerung der Ausführungsgeschwindigkeit erreicht wird.

Alternativ kann man die Unterbrechung mittels einer Unterbrechungsroutine derart durchführen, daß die Unterbrechungsroutine abhängig von der letzten Unterbrechung (z.B. des Unterbrechungsstartpunkts und der Unterbrechungsdauer) die nächste Unterbrechung einstellt und durchführt. ln diesem Fall muß nur sichergestellt werden, daß während der Ausführung der Anwendung die Unterbrechungsroutine immer wieder aufgerufen wird. Die Unterbrechungen werden also nicht in zeitlich konstanten Abständen, sondern in unterschiedlichen Zeitabständen durchgeführt. Dennoch kann eine vorher definierte Verringerung gezielt eingestellt werden.

In einer bevorzugten Weiterbildung des erfindungsgemäßen Verfahrens wird zusätzlich zur Verringerung der Ausführungsgeschwindigkeit noch die Lesbarkeit einer auf einer Ausgabeeinheit des Computersystems dargestellten (graphischen) Benutzeroberfläche der Anwendung verschlechtert. Dies führt zu dem Vorteil, daß der Bedienkomfort ohne Einschränkung der durch die Anwendung bereitgestellten Funktionalität verringert wird, wodurch der Benutzer von der Nutzung der Anwendung, für die keine Laufberechtigung mehr vorliegt, abgehalten wird.

Insbesondere wird die Verschlechterung der Lesbarkeit der dargestellten Benutzeroberfläche so gestaltet, daß sie mit der Zeit zunimmt, wobei diese Zunahme bevorzugt nicht linear ist. Dies führt zu einer weiteren Einschränkung der Bedienbarkeit der Anwendung, so daß, wie gewünscht, die Anwendung nicht mehr benutzt wird.

Die Verschlechterung der Lesbarkeit kann auf unterschiedlichste Arten erfolgen. So kann man beispielsweise den Kontrast (Helligkeits- und/oder Farbkontrast) der dargestellten Benutzeroberfläche verringern. Auch eine Verringerung der Helligkeit der dargestellten Benutzeroberfläche ist möglich. Femer kann die Benutzeroberfläche auch transparenter dargestellt werden, so daß dahinterliegende Fenster (beispielsweise bei Windows-Betriebssystemen) oder der dahinterliegende Bildhintergrund durchscheint. Des weiteren kann auch die Farbgestaltung der Benutzeroberfläche so verändert werden, daß die Lesbarkeit vermindert wird. Die Verminderung der Lesbarkeit kann sich auf einen oder mehrere Bereiche der Benutzeroberfläche oder aber auf die gesamte Benutzeroberfläche beziehen.

Bei einer weiteren Ausgestaltung des erfindungsgemäßen Verfahrens kann zusätzlich zur Verringerung der Ausführungsgeschwindigkeit eine zusätzliche Eingabe durch den Benutzer gefordert werden, ohne die die Anwendung nicht weiter ausgeführt wird. Bei dieser zusätzlichen Eingabe kann es sich beispielsweise um ein erneutes Einloggen am Computersystem handeln. Diese zusätzliche Eingabe kann wiederholt gefordert werden, wobei bevorzugt die Zeitabstände zwischen ihnen mit der Zeit immer geringer werden.

Der Code, der zur Ausführung der beschriebenen Verfahrensschritte notwendig ist, kann in der Anwendung vollständig oder teilweise integriert sein. lnsbesondere kann er schon bei der Erstellung der Anmeldung vorgesehen werden. Alternativ ist es auch möglich, den notwendigen Code mit der sogenannten automatischen Einbindung bei einer schon vorhandenen Anwendung zu integrieren. Dazu wird der Code so der schon vorhandenen Anwendung beigefügt, daß der zusätzliche Code vor Ausführung des Codes der schon vorhandenen Anwendung ausgeführt wird. Der Code der schon vorhandenen Anwendung wird quasi durch den zusätzlichen Code umschlossen.

Der mittels der automatischen Einbindung hinzugefügte Code hängt sich dann an geeigneter Stelle bei der Anwendung ein, um die oben beschriebenen Verfahrensschritte ermöglichen zu können. So kann er sich beispielsweise bei Systemaufrufen der Anwendung (Aufrufe, mit denen vom Computersystem bzw. dessen Betriebssystem bereitgestellte Funktionen aufgerufen werden) einhängen. Wichtig ist, daß das Einhängen so erfolgt, daß die beschriebenen Verfahrensschritte sicher durchgeführt werden können.

Die Aufgabe wird auch durch ein Computersystem mit einer installierten Anwendung und einem Überprüfungsmittel gelöst, das überprüft, ob eine vorbestimmte Laufberechtigung für die Anwendung vorliegt, und, falls die vorbestimmte Laufberechtigung nicht vorliegt, bewirkt, daß die Ausführungsgeschwindigkeit der Anwendung auf dem Computersystem geringer ist als die Ausführungsgeschwindigkeit der Anwendung bei Vorliegen der vorbestimmten Laufberechtigung und daß die Verringerung der Ausführungsgeschwindigkeit mit der Zeit erhöht wird.

Insbesondere kann das Überprüfungsmittel, falls die vorbestimmte Laufberechtigung nicht vorliegt, nach zusätzlich bewirken, daß die Lesbarkeit einer auf einer Ausgabeeinheit des Computersystems dargestellte Benutzeroberfläche der Anwendung im Vergleich zur Lesbarkeit der dargestellten Benutzeroberfläche bei Vorliegen der vorbestimmten Laufberechtigung verschlechtert ist.

Dadurch wird in vorteilhafter Weise erreicht, daß zwar die durch die Anwendung bereitgestellte Funktionalität erhalten bleibt, aber aufgrund der Verringerung der Ausführungsgeschwindigkeit und gegebenenfalls der verschlechterten Lesbarkeit der dargestellten Benutzeroberfläche nicht mehr sinnvoll nutzbar ist. Somit kann die Anwendung benutzerfreundlich (z.B. durch Abspeichern der Arbeitsergebnisse) beendet werden.

Das Überprüfungsmittel kann als Software und/oder Hardware ausgebildet sein. lnsbesondere kann es so weitergebildet werden, daß es die oben beschriebenen Weiterbildungen des erfindungsgemäßen Verfahrens bewirkt.

So kann das Überprüfungsmittel die Verringerung der Ausführungsgeschwindigkeit und gegebenenfalls die Verschlechterung der Lesbarkeit unmittelbar bewirken oder auch mittelbar bewirken, indem eine zusätzliche Komponente über die nicht vorliegende Laufberechtigung informiert wird, und die zusätzliche Komponente dann die Verringerung der Ausführungsgeschwindigkeit und/oder die Verschlechterung der Lesbarkeit hervorruft. Das Überprüfungsmittel und die zusätzliche Komponente können jeweils vollständig oder teilweise Teil der Anwendung oder aber kein Bestandteil der Anwendung sein.

Das erfindungsgemäße Computerprogrammprodukt umfaßt Softwarecode, mit dem die Schritte gemäß des erfindungsgemäßen Verfahrens und insbesondere der beschriebenen Weiterbildungen des erfindungsgemäßen Verfahrens ausgeführt werden, wenn das Produkt auf einem Computersystem läuft. Ein solches Computersystem umfaßt beispielsweise neben der erforderlichen Hardware (wie z.B. Prozessor, Arbeitsspeicher, nicht-flüchtiger Speicher, Ausgabeeinheit, Eingabeeinheit) auch noch ein Betriebssystem. Der Softwarecode (Anweisungen und gegebenenfalls Daten) des erfindungsgemäßen Computerprogrammprodukts ist an das Computersystem so angepaßt, daß bei Ausführung des Computerprogrammprodukts und somit des Softwarecodes die Schritte des erfindungsgemäßen Verfahrens verwirklicht werden. In einer vorteilhaften Weiterbildung des erfindungsgemäßen Computerprogrammprodukts ist dieses auf einem vom Computersystem lesbaren Datenträger gespeichert. Als Datenträger kann jedes Medium verwendet werden, von dem das gespeicherte Computerprogrammprodukt wieder ausgelesen werden kann, wie z.B. eine Diskette, eine CD, eine DVD, ein Magnetband, eine Festplatte oder andere nichtflüchtige Speicherelemente.

Die Erfindung wird nachfolgend beispielshalber anhand der Zeichnungen noch näher erläutert. Es zeigen:
- Fig. 1: schematisch eine Ausführungsform des erfindungsgemäßen Computer-systems, und
- Fig. 2a und 2b: eine auf einer Ausgabeeinheit des Computersystems von Fig. 1 dargestellte Benutzeroberfläche der Anwendung.

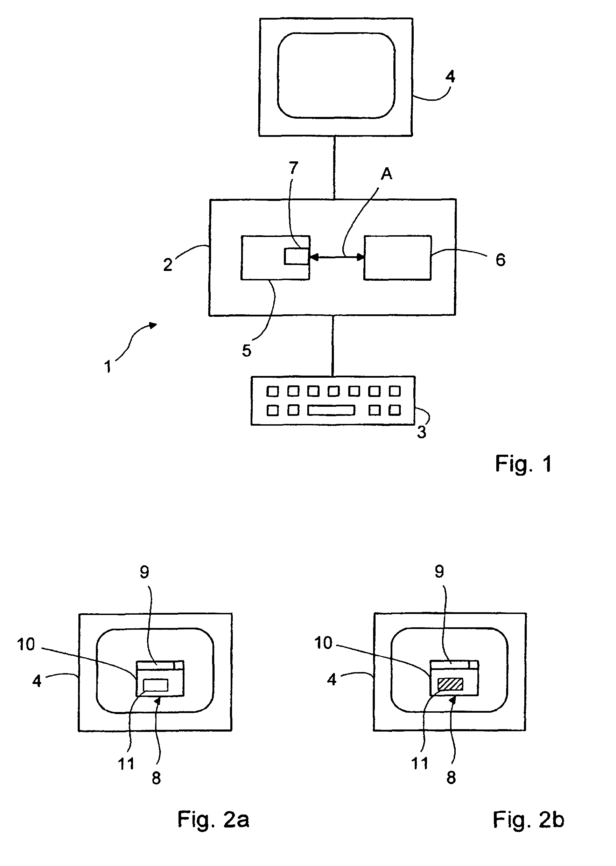

In Fig. 1 ist schematisch eine Ausführungsform des erfindungsgemäßen Computersystems 1 gezeigt, das einen Rechenabschnitt 2 (mit z.B. Prozessor, Festplatte, weiteren Hardware-Elementen sowie einem Betriebssystem), eine Eingabeeinheit 3 (hier beispielsweise eine Tastatur) sowie eine Ausgabeeinheit 4 (z.B. Bildschirm) umfaßt.

Auf dem Computersystem 1 sind eine Anwendung 5 sowie ein Lizenzmanager 6 installiert. Die Anwendung 5 enthält ein Lizenzmodul 7, das beim Starten der Anwendung 5 und/oder während der Ausführung der Anwendung 5 (beispielsweise in vorbestimmten Zeitintervallen) zusammen mit dem Lizenzmanager 6 überprüft (wie durch den Doppelpfeil A angedeutet ist), ob eine vorbestimmte Laufberechtigung (bzw. Lizenz) für die Anwendung vorliegt. Diese Überprüfung des Vorhandenseins der Laufberechtigung dient dazu, eine unberechtigte Nutzung der Anwendung zu verhindern.

Falls die vorbestimmte Laufberechtigung vorliegt, kann die Anwendung 5 normal ausgeführt werden. Falls jedoch die vorbestimmte Laufberechtigung nicht vorliegt, da sie beispielsweise abgelaufen ist, wird vom Lizenzmodul 7 und/oder dem Lizenzmanager 6 eine Anzeige erzeugt, die angibt, daß die Lizenz abgelaufen ist und daß deshalb die Nutzung der Anwendung nur noch sehr eingeschränkt möglich sein wird. Diese Anzeige kann z.B. in einem Fenster bzw. in einer (graphischen) Benutzeroberfläche der Anwendung 5 über die Anzeigeeinheit 4 ausgegeben werden.

Gleichzeitig wird mittels dem Lizenzmodul 7 und/oder dem Lizenzmanager 6 die Ausführungsgeschwindigkeit der Anwendung 5 im Vergleich zur Ausführungsgeschwindigkeit bei Vorliegen der Nutzungsberechtigung so verringert, daß eine sinnvolle Nutzung der Anwendung kaum mehr möglich ist.

Das Lizenzmodul 7 und der Lizenzmanager 6 bilden ein Überprüfungsmittel, das das Vorliegen der Laufberechtigung überprüft und in Abhängigkeit des Überprüfungsergebnisses die normale Ausführung der Anwendung zuläßt bzw. die Ausführung der Anwendung mit geringerer Ausführungsgeschwindigkeit bewirkt.

Die Verringerung der Ausführungsgeschwindigkeit kann beispielsweise dadurch realisiert werden, daß der Anwendung 5 eine geringere Priorität als bisher zugewiesen wird, so daß ihr aufgrund der geringeren Priorität weniger Rechenzeit des Rechenabschnitts 2 zur Verfügung gestellt wird. Damit wird die Ausführungsgeschwindigkeit der Anwendung 5 insgesamt verlangsamt. Die Verringerung der Ausführungsgeschwindigkeit wird somit durch eine Verknappung einer Ressource erreicht, die der Anwendung 5 vom Computersystem 1 bereitgestellt wird.

Die Verringerung der Ausführungsgeschwindigkeit der Anwendung 5 kann auch dadurch erreicht werden, daß die Rechenleistungen des Computersystems 1 insgesamt verringert wird. Dies kann man beispielsweise dadurch realisieren, daß die Taktfrequenz des Prozessors des Rechenabschnitts 2 verringert wird.

Ferner ist eine Verringerung der Ausführungsgeschwindigkeit dadurch möglich, daß die Anwendung 5 Programmcode enthält, der bei abgelaufener Laufberechtigung ausgeführt wird und dazu dient, die Ausführungsgeschwindigkeit der Anwendung 5 zu verringern. Bei diesem Programmcode kann es sich um Code handeln, dessen Ausführung zu der Verlangsamung führt. Auch kann der Code bewirken, daß eine vom Computersystem 1 der Anwendung 5 zugewiesene Rechenzeit nicht genutzt wird. Ferner kann der Code einen zusätzlichen Ausführungspfad (bzw. Thread) in der Anwendung 5 darstellen, wobei bevorzugt diesem zusätzlichen Ausführungspfad eine höhere Priorität als allen anderen Ausführungspfaden der Anwendung 5 zugewiesen wird. In diesem zusätzlichen Ausführungspfad können wiederum Funktionen verwirklicht werden, die dazu dienen, die Ausführungsgeschwindigkeit der Anwendung 5 insgesamt zu verringern.

Eine Verringerung der Ausführungsgeschwindigkeit der Anwendung 5 kann auch dadurch erreicht werden, daß die Ausführung von Abschnitten der Anwendung 5 mehr Systemleistung des Computersystems 1 benötigen. Wenn das Computersystem 1 einen in Speicherseiten unterteilten Hauptspeicher umfaßt, in denen jeweils Abschnitte der Anwendung 5 gespeichert werden, kann dies dadurch realisiert werden, daß Speicherseiten des Hauptspeichers, in denen Abschnitte der Anwendung 5 gespeichert sind, so markiert werden, daß darauf nicht zugegriffen werden kann. Dies kann man beispielsweise dadurch erreichen, daß die entsprechenden Speicherseiten als nicht vorhanden oder als frei markiert werden, so daß der entsprechende Abschnitt, obwohl er schon gespeichert ist, nochmals in dem Hauptspeicher geladen werden muß.

Die Verringerung der Ausführungsgeschwindigkeit der Anwendung 5 wird bevorzugt mit der Zeit erhöht, so daß die Ausführungsgeschwindigkeit immer langsamer wird. Dies kann so lange fortgeführt werden, bis die Anwendung gar nicht mehr ausführbar ist. Die Erhöhung der Verringerung kann zeitlich konstant sein oder mit der Zeit zunehmen. So kann die Verringerung der Ausführungsgeschwindigkeit beispielsweise exponentiell erhöht werden.

Bei Anwendungen, die eine (graphische) Benutzeroberfläche enthalten, kann zusätzlich noch die Benutzeroberfläche bzw. deren Darstellung auf dem Bildschirm so geändert werden, daß die Lesbarkeit der Benutzeroberfläche und dadurch auch die Bedienung der Anwendung erschwert wird.

So kann beispielsweise die Lesbarkeit der Benutzeroberfläche dadurch verschlechtert werden, daß der Kontrast (Helligkeits- und/oder Farbkontrast) der dargestellten Benutzeroberfläche verringert wird und/oder die Benutzeroberfläche transparenter dargestellt wird, so daß dahinter liegende Elemente durchscheinen. Ferner kann auch die Helligkeit der dargestellten Benutzeroberfläche verringert werden. Die Verschlechterung der Lesbarkeit kann so erfolgen, daß sie mit der Zeit zunimmt.

ln Fig. 2a ist der Bildschirm 4 des Computersystems von Fig. 1 mit einer auf dem Bildschirm 4 dargestellten Benutzeroberfläche 8 der Anwendung 5 gezeigt. Die Benutzeroberfläche 8 umfaßt, wie bei Windows-Betriebssystemen üblich, eine Kopfleiste 9 sowie einen aktiven Bereich 10, in dem Informationen dargestellt und/oder eingegeben werden können. Es wird hier angenommen, daß beispielsweise in dem eingezeichneten Abschnitt 11 Benutzereingaben getätigt werden müssen, um die Anwendung 5 bedienen zu können.

Dieser Abschnitt 11 wird beispielsweise mit geringerer Helligkeit dargestellt, wenn die vorbestimmte Laufberechtigung nicht vorliegt, wie durch die schraffierte Darstellung in Fig. 2b angedeutet ist. Dadurch wird die Bedienbarkeit der Anwendung erschwert.

## Patentansprüche

1. Verfahren zum Betreiben eines Computersystems (1), auf dem eine Anwendung (5) installiert ist, wobei das Verfahren folgende Schritte umfaßt:
Überprüfen, ob eine vorbestimmte Laufberechtigung für die Anwendung (5) vorliegt, und, falls die vorbestimmte Laufberechtigung nicht vorliegt, Verringern der Ausführungsgeschwindigkeit der Anwendung (5) auf dem Computersystem (1) im Vergleich zur Ausführungsgeschwindigkeit der Anwendung (5) bei Vorliegen der vorbestimmten Laufberechtigung, wobei die Verringerung der Ausführungsgeschwindigkeit mit der Zeit erhöht wird.

2. Verfahren nach Anspruch 1, bei dem zur Verringerung der Ausführungsgeschwindigkeit eine der Anwendung (5) vom Computersystem (1) bereitgestellte Ressource verknappt wird.

3. Verfahren nach einem der obigen Ansprüche, bei dem zur Verringerung der Ausführungsgeschwindigkeit die Bandbreite, mit der die Anwendung (5) mit einem Softwareund/oder Hardware-Modul des Computersystems (1) kommuniziert, reduziert wird.

4. Verfahren nach einem der obigen Ansprüche, bei dem zur Verringerung der Ausführungsgeschwindigkeit der Überprüfungsschritt wiederholt und bevorzugt verlangsamt ausgeführt wird.

5. Verfahren nach einem der obigen Ansprüche, bei dem zur Verringerung der Ausführungsgeschwindigkeit die Rechenleistung des Computersystems (1) verringert wird.

6. Verfahren nach einem der obigen Ansprüche, bei dem zur Verringerung der Ausführungsgeschwindigkeit Code, insbesondere Code der Anwendung (5), ausgeführt wird.

7. Verfahren nach einem der obigen Ansprüche, bei dem zur Verringerung der Ausführungsgeschwindigkeit die von der Anwendung (5) bei der Ausführung benötigte Systemleistung erhöht wird.

8. Verfahren nach einem der obigen Ansprüche, bei dem zur Verringerung der Ausführungsgeschwindigkeit die Ausführung der Anwendung (5) zeitweise unterbrochen wird.

9. Verfahren nach einem der obigen Ansprüche, bei dem zusätzlich zur Verringerung der Ausführungsgeschwindigkeit noch die Lesbarkeit einer auf einer Ausgabeeinheit (4) des Computersystems (1) dargestellten Benutzeroberfläche (8) der Anwendung verschlechtert wird, wobei bevorzugt die Verschlechterung der Lesbarkeit mit der Zeit zunimmt

10. Computersystem (1) mit einer installierten Anwendung und einem Überprüfungsmittel (6, 7), das überprüft, ob eine vorbestimmte Laufberechtigung für die Anwendung (5) vorliegt, und, falls die vorbestimmte Laufberechtigung nicht vorliegt, bewirkt, daß die Ausführungsgeschwindigkeit der Anwendung (5) auf dem Computersystem (1) geringer ist als die Ausführungsgeschwindigkeit der Anwendung (5) bei Vorliegen der vorbestimmten Laufberechtigung und daß die Verringerung der Ausführungsgeschwindigkeit mit der Zeit erhöht wird.

11. Computer system nach Anspruch 10, wobei das Überprüfungsmittel, falls die vorbestimmte laufberechtigung nicht vorliegt, zusätzlich such bewirlet, daß die Lesbarkeit einer auf einer Ausgabeeinheit (4) des Computersystems (1) dargestellten Benutzeroberfläche (8) der Anwendung (5) verschlechtert ist im Vergleich zur dargestellten Benutzeroberfläche (8) bei Vorliegen der vorbestimmten Laufberechtigung.

12. Computerprogrammprodukt, das Softwarecode umfaßt, mit dem die Schritte gemäß einem der Ansprüche 1 bis 9 ausgeführt werden, wenn das Produkt auf einem Computersystem läuft.

## Claims

1. A method of operating a computer system (1) on which an application (5) is installed, said method comprising the steps of:
verifying whether a predetermined run authorization for the application (5) is present, and,
in the absence of said predetermined run authorization, decreasing the speed of execution of the application (5) on the computer system (1) as compared to the speed of execution of the application (5) in the presence of the predetermined run authorization, the decrease in the speed of execution being increased with time.

2. The method as claimed in Claim 1, wherein a resource provided to the application (5) by the computer system (1) is made scarce in order to decrease the speed of execution.

3. The method as claimed in any one of the above Claims, wherein the bandwidth at which the application (5) communicates with a software module and/or a hardware module of the computer system (1) is reduced.

4. The method as claimed in any one of the above Claims, wherein the verification step is repeated and preferably executed more slowly in order to decrease the speed of execution.

5. The method as claimed in any one of the above Claims, wherein the computing power of the computer system (1) is reduced in order to decrease the speed of execution.

6. The method as claimed in any one of the above Claims, wherein code, in particular code of the application (5), is executed in order to decrease the speed of execution.

7. The method as claimed in any one of the above Claims, wherein the system performance required by the application (5) during execution is increased in order to decrease the speed of execution.

8. The method as claimed in any one of the above Claims, wherein execution of the application (5) is temporarily interrupted in order to decrease the speed of execution.

9. The method as claimed in any one of the above Claims, wherein, in addition to the decrease in the speed of execution, the readability of the user interface (8) of the application displayed on an output unit (4) of the computer system (1) is deteriorated, said deterioration in readability preferably increasing with time.

10. A computer system (1) comprising an installed application and a means of verification (6, 7), which verifies whether a predetermined run authorization for the application (5) is present, and, if said predetermined run authorization is not present, causes the speed of execution of the application (5) on the computer system (1) to be lower than the speed of execution of the application (5) in the presence of the predetermined run authorization and causes the decrease in the speed of execution to increase with time.

11. The computer system as claimed in Claim 10, wherein the means of verification, in the absence of said predetermined run authorization, additionally causes a deterioration of the readability of a user interface (8) of the application (5) displayed on an output unit (4) of the computer system (1) as compared to the user interface (8) displayed in the presence of the predetermined run authorization.

12. A computer program product, comprising software code, by which the steps of the method according to any one of Claims 1 to 9 are executed once the product is running on a computer system.

## Revendications

1. Procédé d'exploitation d'un système informatique (1), sur lequel est installé une application (5), le procédé comportant les étapes suivantes:
vérification de la présence d'une autorisation prédéterminée d'execution de l'application (5), et,
si cette autorisation d'exécution n'est pas présente, une réduction de la vitesse d'exécution de l'application (5) sur le système informatique (1) relativement à la vitesse d'exécution de l'application (5) dans la présence de ladite autorisation d'exécution prédéterminée, ladite réduction de la vitesse d'exécution étant augmentée avec le temps.

2. Procédé selon la revendication 1, dans lequel une ressource mise à la disposition de l'application (5) par le système informatique (1) est rarifiée afin de réduire la vitesse d'exécution.

3. Procédé selon l'une quelconque des revendications précédentes, dans lequel la largeur de bande sur laquelle l'application (5) communique avec un module logiciel et/ou un module matériel du système informatique (1) est réduite afin de réduire la vitesse d'exécution.

4. Procédé selon l'une quelconque des revendications précédentes, dans lequel l'étape de vérification est effectuée d'une manière répétitive et, de préférence, rallentie, afin de réduire la vitesse d'exécution.

5. Procédé selon l'une quelconque des revendications précédentes, dans lequel la puissance de traitement du système informatique (1) est réduite afin de réduire la vitesse d'exécution.

6. Procédé selon l'une quelconque des revendications précédentes, dans lequel un code, particulièrement un code de l'application (5), est exécuté afin de réduire la vitesse d'exécution.

7. Procédé selon l'une quelconque des revendications précédentes, dans lequel la puissance du système requise par l'application (5) en exécution est augmentée afin de réduire la vitesse d'exécution.

8. Procédé selon l'une quelconque des revendications précédentes, dans lequel l'exécution de l'application (5) est temporairement interrompue afin de réduire la vitesse d'exécution.

9. Procédé selon l'une quelconque des revendications précédentes, dans lequel, en plus de la réduction de la vitesse d'exécution, la facilité de lecture d'une interface utilisateur (8) de l'application représentée sur une unité de sortie (4) du système informatique (1) est détériorée, cette détérioration de la facilité de lecture augmentant, de préférence, avec le temps.

10. Système informatique (1) comprenant une application installée sur celui-ci et un moyen de vérification (6, 7) qui vérifie la présence d'une autorisation prédéterminée d'execution de l'application (5), et si cette autorisation d'exécution n'est pas présente, ce moyen a pour effet que la vitesse d'exécution de l'application (5) sur le système informatique (1) est plus basse que la vitesse d'exécution de l'application (5) dans la présence de ladite autorisation d'exécution prédéterminée, et que ladite réduction de la vitesse d'exécution est augmentée avec le temps.

11. Système informatique selon la revendication 10, dans lequel le moyen de vérification, dans l'absence de l'autorisation d'exécution, a pour effet additionnel que la facilité de lecture d'une interface utilisateur (8) de l'application (5) représentée sur une unité de sortie (4) du système informatique est détériorée par comparaison avec l'interface utilisateur (8) représentée dans la présence de l'autorisation d'exécution prédéterminée.

12. Produit de programme d'ordinateur qui comprend un code logiciel au moyen duquel les étapes selon l'une des revendications 1 à 9 sont exécutées, lorsque le produit tourne sur un système informatique.
